# FASCICULE DE BREVET EUROPEEN

(11) **EP 1 444 692 B1**
(45) Date de publication et mention de la délivrance du brevet: **14.05.2008**
(21) Numéro de dépôt: 02790551.2
(22) Date de dépôt: 08.11.2002
(51) Int. Cl.: G11B 7/24

(54) **UTILISATION D'OXYDES SPINELLES OXYDABLES POUR ENREGISTREMENT OPTIQUE**
VERWENDUNG VON OXYDIERBAREN SPINELLOXYDEN FÜR OPTISCHE AUFZEICHNUNG
USE OF OXIDABLE SPINELS FOR OPTICAL RECORDING

(30) Priorité: 12.11.2001 FR 0114596
(43) Date de publication de la demande: 11.08.2004
(73) Titulaire: UNIVERSITE PAUL SABATIER (TOULOUSE III), 31062 Toulouse Cedex (FR); CENTRE NATIONAL DE LA RECHERCHE SCIENTIFIQUE, 75794 Paris Cedex 16 (FR)
(72) Inventeur: TAILHADES, Philippe, F-31650 Saint-Orens (FR); BONNINGUE, Corinne, F-31400 Toulouse (FR); PASQUET, Isabelle, F-31500 Toulouse (FR); PRESMANES, Lionel, F-31320 Castanet (FR)
(74) Mandataire: Le Coupanec, Pascale A.M.P.
(86) Numéro de dépôt international: PCT/FR2002/003837
(87) Numéro de publication internationale: WO 2003/042991

(56) Documents cités:
- EP-A- 0 658 892
- FR-A- 2 768 548
- US-A- 5 691 091

## Description

L'invention concerne un nouveau procédé d'enregistrement d'informations sous forme numérique, sur un support optique enregistrable une seule fois.

Plus précisément, l'invention concerne un procédé d'enregistrement exploitant des phénomènes simultanés d'oxydation, de cristallisation et de déformation topographique que présentent des films d'oxydes spinelles oxydables de métaux de transition après un bref chauffage local par un spot laser de puissance convenable. Les informations écrites peuvent être lues par détection de différences de propriétés optiques entre les zones écrites et les zones vierges.

On sait que l'information sous forme numérique utilise des éléments d'information binaire ou bits. Les deux états de l'information binaire sont généralement symbolisés par les nombres 0 et 1. Dans les supports optiques, tels que disques, bandes ou cartes, l'enregistrement des bits d'information est réalisé sous la forme d'une succession de modifications physiques localisées le long d'une piste sur une couche d'enregistrement, aussi appelée couche sensible. La présence d'une telle modification, et son absence, traduisent les deux états de l'information binaire. La lecture de l'information enregistrée consiste à détecter ces modifications et ces absences de modifications à l'aide de moyens optiques appropriés.

Pour le stockage de l'information, et notamment pour l'archivage, on utilise des supports d'information enregistrables une seule fois, dits de type WORM (acronyme de Write Once Read Many).

Il existe également des disques préenregistrés non-réinscriptibles (CD-ROM, DVD-ROM) qui sont utilisés pour la diffusion de masse d'informations variées, telles que des sons, des images ou encore des logiciels.

Les matériaux utilisés jusqu'à présent pour les supports pré-enregistrés non-réinscriptibles ou pour les supports enregistrables une seule fois, sont soit des métaux, soit des matériaux organiques. De tels matériaux peuvent être sensibles à l'oxydation (cas des métaux), à l'humidité (cas des métaux et des polymères). Ces matériaux sont, en outre, soumis à des phénomènes de relaxation avec le temps (cas des métaux amorphes et des polymères). De tels phénomènes de vieillissement sont susceptibles d'affecter le caractère permanent et fiable des informations enregistrées.

Il existe donc un besoin de nouveaux supports d'enregistrement et de nouvelles méthodes d'écritures qui garantissent une conservation durable des données enregistrées, y compris dans le domaine de l'archivage, qui suppose un stockage de longue durée.

Un autre but de la recherche, dans le domaine du stockage de l'information, est d'augmenter la densité d'enregistrement de façon à stocker toujours plus d'informations par unité de surface du support d'enregistrement. Pour toutes les techniques d'enregistrement optiques actuelles, la densité de stockage est limitée par les phénomènes de diffraction de la lumière, de sorte que les plus petites marques représentant les bits d'information que l'on peut lire avec un système optique classique ont un diamètre qui est proportionnel à la longueur d'onde de la radiation lumineuse utilisée pour la lecture, et qui est inversement proportionnel à l'ouverture numérique de l'objectif de la tête de lecture optique. Il est donc important de pouvoir utiliser des longueurs d'onde aussi courtes que possible. Actuellement, les longueurs d'onde utilisées se situent dans le domaine spectral 650-780 nm.

Il est donc souhaitable de rechercher de nouveaux matériaux d'enregistrement capable d'utiliser des longueurs d'onde plus courtes, inférieures à 600 nm.

On a maintenant découvert que des couches minces de certains oxydes spinelles de métaux de transition sont utilisables comme couches d'enregistrement irréversible dans des supports d'enregistrement optiques enregistrables une seule fois. Les oxydes spinelles utilisables sont des oxydes spinelles oxydables, stoechiométriques ou sous- stoechiométriques, contenant des métaux de transition susceptibles d'avoir plusieurs degrés d'oxydation. L'intérêt de ces matériaux réside dans leur grande stabilité chimique et structurale au voisinage de la température ambiante. Ils sont, par ailleurs, généralement utilisables dans un large domaine spectral, y compris aux courtes longueurs d'onde, voisines de 400 nm, et permettent donc le stockage de fortes densités d'information. Enfin, les supports d'information obtenus conformément à l'invention peuvent être réalisés dans des configurations optiques très simples constituées par un substrat (verre ou polymère) et la couche sensible.

Les supports optiques d'information obtenus selon l'invention peuvent être utilisés de façon classique, avec le faisceau laser traversant d'abord le substrat, puis la couche sensible, et dans ce cas une couche optiquement absorbante, dont le rôle sera précisé plus loin, peut être placée à l'arrière de la couche sensible. Les supports optiques d'information selon l'invention peuvent aussi être utilisés selon les techniques dites à champ proche, dans lesquelles le faisceau laser traverse en premier la couche sensible. Dans les techniques à champ proche, une tête optique miniaturisée plane très près de la surface de la couche sensible, à quelques centaines de nanomètres, de façon comparable à la technique utilisée pour les disques durs magnétiques. Grâce à la dureté mécanique du matériau de la couche sensible utilisée, l'invention fournit des supports optiques utilisables selon les techniques à champ proche, sans qu'il soit nécessaire de revêtir la couche sensible d'une couche de protection. Par ailleurs, la couche sensible possède une grande stabilité chimique dans une large gamme de températures. Ainsi, quel que soit le type d'utilisation, la protection de la couche sensible n'est pas nécessaire.

Dans la présente demande, on appelle oxyde spinelle de type stoechiométrique des oxydes dans lesquels le rapport atomique métaux/oxygène est voisin de 3 / 4.

Certains ferrites spinelles lacunaires (déficients en cations) obtenues par oxydation de ferrites spinelles stoechiométriques ont déjà été proposés pour l'enregistrement magnéto-optique. Les supports d'information optique obtenus sont du type effaçable et ré-enregistrable (brevet français n° 2 714205 ; brevet US 6 017 645).

Des ferrites spinelles lacunaires (déficients en cations) obtenus par oxydation de ferrites spinelles stoechiométriques ont déjà également été proposés pour l'enregistrement optique de type WORM (demande internationale PCT WO 99/14747). Le procédé d'enregistrement consiste à échauffer localement des zones de la couche sensible à une température à laquelle l'oxyde spinelle lacunaire (structure de spinelle) se transforme de façon irréversible en une structure cristalline différente (structure de type corindon). L'obtention d'une couche sensible à base d'oxyde spinelle lacunaire présente l'inconvénient de nécessiter un traitement thermique oxydant postérieurement au dépôt de la couche sensible sur un substrat. La nécessité d'un tel traitement thermique limite le choix des matériaux constituant le substrat sur lequel est déposée la couche sensible.

Au contraire, les supports d'enregistrement utilisables conformément à l'invention, ne nécessitent pas de traitements thermiques. Ils sont obtenus simplement par le dépôt de la couche sensible, et éventuellement d'une couche réflectrice, ce qui permet notamment d'utiliser les phénomènes de contraintes liés au dépôt des couches minces. On sait en effet que les procédés physiques de dépôt sous pression réduite conduisent généralement à l'obtention de films contraints. Dans le procédé d'enregistrement de l'invention, l'existence de telles contraintes facilite l'écriture, comme on le verra dans la partie expérimentale ci-après.

L'invention a donc pour objet un procédé d'enregistrement d'informations sous forme numérique, sur un support optique enregistrable une seule fois comprenant une couche sensible déposée, sous forme de couche mince, sur un substrat, ledit procédé comprenant des étapes d'enregistrement consistant à échauffer localement, et successivement, des zones de la couche sensible, ladite couche sensible étant réalisée en un matériau oxydable qui comprend, en dehors d'agents dopants éventuellement présents, un oxyde spinelle oxydable comprenant, sous forme d'oxydes, au moins deux métaux de transition ayant des états d'oxydation différents. Les oxydes utilisables étant de type spinelle, ils sont caractérisés par un rapport atomes métalliques/atomes d'oxygène voisin de 3/4, mais qui peut être supérieur à 3/4 dans le cas d'oxydes sous-stoechiométriques. En fait, ces oxydes sont des composés ioniques, de sorte que le rapport atomes métalliques/atomes d'oxygène est en réalité le rapport molaire cations/anions.

De préférence, la couche sensible consiste essentiellement en un oxyde spinelle oxydable.

Dans le procédé d'enregistrement selon l'invention, on effectue ledit échauffement dans des conditions permettant l'oxydation dudit oxyde spinelle oxydable.

Les oxydes spinelles utilisés étant oxydables, ils contiennent évidemment au moins un oxyde d'un métal susceptible de présenter plusieurs états d'oxydation, comme par exemple le cuivre, le fer, le manganèse, le molybdène, le vanadium, le tungstène et les terres rares.

Les oxydes de type spinelle utilisables peuvent contenir un seul métal, qui est alors présent, dans l'oxyde, dans deux états d'oxydation différents, comme par exemple le fer ou le manganèse dans les oxydes Fe₃O₄ ou Mn₃O₄.

D'autres métaux pouvant être présents dans les oxydes de type spinelle utilisables sont notamment le cobalt, le chrome, l'aluminium, le magnésium, le nickel, le zinc, etc.

Parmi les oxydes spinelles oxydables utilisables, on peut citer en particulier ceux de formule I :

Mₓ³⁺M'_{y}ⁿ⁺M"_{z}²⁺O_{4+δ}²⁻ (I)

dans laquelle M représente au moins un métal trivalent choisi parmi Fe, Mn, Co, Cr et Al,
M' représente au moins un métal susceptible d'avoir plusieurs degrés d'oxydation,
M" est un métal divalent choisi parmi Mg, Co, Ni, Cu et Zn,
n est la valence de M' dans l'ion M'ⁿ⁺, qui est un ion oxydable en un ion de valence supérieure à n,
x représente la quantité d'atomes de métal M et peut varier de 0,8 à 2,8 environ,
y est un nombre représentant la quantité d'atomes M' et est au moins égal à environ 0,2,
z est un nombre, éventuellement nul, représentant là quantité d'atomes M",
δ est un nombre égal à (3x + ny + 2z-8)/2, et
la somme (x+y+z) étant égale à 3.

Avec les oxydes de formule I, le procédé d'enregistrement de l'invention est mis en oeuvre en effectuant l'échauffement dans des conditions permettant l'oxydation de l'ion, ou des ions, M^{,n+}.

On rappelle ci-après quelques propriétés connues des oxydes spinelles de métaux de transition, en prenant l'exemple des ferrites spinelles (cas où dans la formule I ci-dessus, M représente Fe). Les autres oxydes spinelles, et notamment ceux de formule I, ont généralement des propriétés similaires.

On sait que la structure du spinelle (MgAl₂O₄) est également celle de la magnétite Fe₃O₄. On sait aussi que l'oxydation de la magnétite conduit au sesquioxyde de fer Fe₂ O₃, qui conserve la structure cristalline de la magnétite, sous la forme dite γ-Fe₂O₃, jusqu'à une température de 460°C environ, où l'oxyde γ-Fe₂O₃ se transforme en α-Fe₂O₃, ayant la structure du corindon.

On sait également que les oxydes de fer sont des composés ioniques, et que la structure de α-Fe₂O₃, qui est obtenue par oxydation de la magnétite, est une structure de spinelle lacunaire. En effet, lors de l'oxydation de Fe₃O₄, des ions oxygène négatifs sont absorbés à la surface de cet oxyde. Ils s'arrangent selon une organisation de type cubique à faces centrées, comme dans le réseau de la magnétite dont ils constituent une extension. Les charges négatives ainsi apportées sont compensées par l'oxydation des ions ferreux en ions ferriques qui migrent alors vers le nouvel arrangement d'anions oxygène dont ils assurent la cohésion en établissant des liaisons Fe³⁺--O²⁻. Au terme de l'oxydation, la structure de type spinelle est conservée. Toutefois, le rapport cations/anions, initialement égal à 3/4, est devenu plus petit compte tenu de l'apport d'anions. Le cristal du produit oxydé comporte alors des sites vacants, encore appelés lacunes. Les ferrites spinelles stoechiométriques, généralement représentés par une formule du type XFe₂O₄, où X est au moins un métal divalent, peuvent également être transformées en oxydes spinelles lacunaires, notamment par oxydation. Il est connu, en outre, qu'en introduisant dans les oxydes spinelles, divers substituants constitués par des métaux ayant des états de valence multiples, il est possible de créer des lacunes ou d'en faire varier le nombre.

On appelle ici ferrites spinelles lacunaires déficients en cations (ou sur-stoechiométriques) des composés du type spinelle à base de γ-Fe₂O₃ modifié par remplacement d'une partie des ions ferriques et des lacunes par des cations métalliques autres que ferriques. Pour représenter des oxydes spinelles lacunaires sur-stoechiométriques en gardant, dans la formule, un nombre d'atomes métalliques égal à 3 (comme dans la formule Fe₃O₄) on est amené à écrire leur formule sous une forme du type :

XₓFe₃₋ₓ O_{4+δ}

où X représente au moins un cation de métal divalent, x est un nombre au plus égal à 1, Fe représente par convention l'ion fer trivalent, O représente un ion O²⁻ et δ est un nombre positif. Une autre façon de représenter ces oxydes spinelles lacunaires sur-stoechiométriques, en gardant cette fois un nombre d'atomes d'oxygène égal à 4 (comme dans la formule Fe₃O₄), est d'écrire sa formule sous une forme équivalente faisant mention des lacunes :

XₓFe_{3-x-y} □_{y} O₄,

le symbole □ représentant les lacunes.

Parmi les oxydes spinelles stoechiométriques oxydables de formule I, on citera notamment la magnétite Fe₃O₄, le chromite de fer FeCr₂O₄ (J. Appl. Phys. 18, 520, 1947), l'aluminate de fer FeAl₂O₄ (Fichier JCPDS 03-0894). On peut également citer l'oxyde de manganèse Mn₃O₄ ainsi que les manganites correspondant à la formule I ci-dessus, avec M=Mn et δ = 0 (ou voisin de zéro). Parmi ces manganites, on peut citer les manganites de nickel de formule Ni_{z} Mn_{3-z} O₄ et les manganites de nickel et de cuivre de formule Ni_{z}Cu_{y}Mn_{3-y-z} O₄; voit notamment C. Drouet et al., Solid State Ionics, 123, 25-37 (1999) et les références citées dans cet article. Tous ces oxydes spinelles stoechiométriques sont oxydables en oxydes spinelles lacunaires déficients en cations.

On citera aussi :
- les composés de formule I à base de fer et de manganèse,
- les composés de formule I à base de chrome et de cuivre,
- les composés de formule I à base de fer, de manganèse, de cobalt et de cuivre.

Les oxydes spinelles modérément sur-stoechiométriques (et donc encore oxydables) correspondent notamment à des produits de formule I pour lesquels le nombre δ est positif mais voisin de zéro, par exemple inférieure à 0,1 (ou à 0,05). Ils sont également utilisables comme matériau pour couche sensible selon l'invention si leur oxydation permet d'obtenir un contraste optique suffisant entre le matériau oxydé et le matériau non oxydé. Cela peut être déterminé dans chaque cas par de simples expériences de routine.

On connaît aussi des oxydes spinelles lacunaires déficients en anions, encore appelés oxydes spinelles sous-stoechiométriques. Les oxydes spinelles sous-stoechiométriques correspondent notamment à des oxydes de formule I pour lesquels le nombre δ est négatif. De tels produits sont évidemment oxydables et peuvent donc être utilisés comme matériau pour couche sensible conformément à l'invention. Par oxydation, les oxydes spinelles sous-stoechiométriques sont transformés en oxydes spinelles stoechiométriques.

Parmi les oxydes spinelles sous-stoechiométriques de formule I, on citera principalement ceux pour lesquels M' représente le cuivre. On peut mentionner le ferrite de cuivre non stoechiométrique qui provient de la réduction d'une partie des ions cuivriques du ferrite cuivrique CuFe₃O₄ ; voir, par exemple X.X. Tsang et al., J. Sol. Stat. Chem., 79, 250-262 (1989), ainsi que les ferrites de cuivre substitués (formule I avec M = Fe, M' = Cu et, lorsque z est différent de zéro, M" choisi parmi Co, Mg, Ni, Cu et Zn). Ces produits, déposés par exemple par pulvérisation cathodique, forment spontanément des oxydes sous-stoechiométriques.

D'une façon générale, les compositions d'oxydes spinelles peuvent être modifiées par des agents dopants qui ne sont pas représentés dans la formule (I), et qui ne font pas nécessairement partie du réseau cristallin. L'utilisation d'un grand nombre d'agents dopants a été décrite pour ce type de composés. La présence d'agents dopants peut par exemple faciliter la régulation de la cristallisation. Généralement les agents dopants sont présents sous forme d'oxydes dans une proportion pondérale ne dépassant pas 1-2 % en poids, par rapport au poids de l'oxyde spinelle oxydable. Les agents dopants sont par exemple le silicium, le phosphore, le bore, des métaux alcalino-terreux (en particulier, Ca, Ba, Sr), des métaux alcalins (par exemple Na, K, Li), le gallium, le germanium, l'arsenic, l'indium, l'antimoine, le bismuth, le plomb, etc.

On a constaté que généralement, lors du dépôt de mélanges d'oxydes ayant la composition d'oxydes spinelles de type stoechiométrique, la couche mince déposée adopte spontanément une structure cristalline de spinelle. Le matériau à base d'oxyde spinelle de type stoechiométrique qui constitue la couche sensible est déposé sous forme d'un matériau polycristallin. La couche déposée est dans un état faiblement cristallisé. Autrement dit, la taille des cristallites est peu élevée, généralement inférieure à 30 nm. On appelle ici « cristallites » des domaines microcristallins qui diffractent de manière cohérente des rayons X et qui sont donc des monocristaux, dont les dimensions peuvent être déterminées notamment par diffraction des rayons X ou par microscopie électronique à transmission. L'enregistrement d'informations (écriture) réalisé conformément à l'invention consiste à échauffer localement une petite zone de la couche sensible, en présence d'air, ce qui conduit à l'oxydation des ions oxydables tels que les ions M'ⁿ⁺. On a remarqué que le faible état de cristallisation, ainsi que la faible épaisseur des couches déposées (allant, par exemple de 10 à 100 nm environ et de préférence de 20 à 80 nm environ), facilitent une oxydation à température modérée (dès 200°C par exemple). La structure de la couche sensible, dans les zones écrites, est inchangée : il s'agit d'une structure de type spinelle, de type spinelle stoechiométrique ou lacunaire selon que le produit de départ est sous-staechiométrique ou stoechiométrique, respectivement, puisque cette structure est le résultat d'une oxydation. Ce traitement d'oxydation s'accompagne d'un accroissement de la taille des cristallites, dû à l'échauffement local lors de l'écriture, et dû aussi au caractère exothermique de la réaction d'oxydation.

On a découvert notamment qu'en déposant une couche mince, d'épaisseur généralement inférieure à 100 nm environ, d'oxyde spinelle stoechiométrique, éventuellement revêtue d'une couche absorbante présentant, à la longueur d'onde utilisée, une absorption optique supérieure à celle de l'oxyde spinelle, l'énergie lumineuse absorbée, qui est convertie en chaleur, échauffe la zone irradiée de façon suffisante pour permettre l'oxydation à l'air de la couche mince, avec transformation au moins partielle en oxyde spinelle lacunaire (déficient en cations) dans ladite zone. Lorsque l'oxyde de départ est sous-stoechiométrique, le produit de l'oxydation est stoechiométrique. La couche absorbante mentionnée ci-dessus est en fait une couche qui est à la fois absorbante et réflectrice, par exemple une couche métallique. Cette couche doit avoir une épaisseur suffisamment faible et/ou une porosité suffisamment élevée pour que l'oxygène ambiant puisse diffuser vers la couche d'oxyde spinelle à oxyder lors de l'écriture.

Les zones vierges (non irradiées) et les zones irradiées présentent alors un contraste optique suffisant pour permettre une lecture à l'aide de moyens optiques appropriés.

Si l'énergie lumineuse utilisée pour l'écriture est supérieure à celle qui est suffisante pour l'oxydation de l'oxyde spinelle stoechiométrique de départ en oxyde spinelle lacunaire, il est possible qu'il y ait alors transformation au moins partielle en une autre structure cristalline, par exemple de type corindon, de façon analogue aux transformations des oxydes spinelles lacunaires décrites dans la demande PCT WO 99/14747. Une telle transformation procure ici encore un contraste optique suffisant, entre zones irradiées et non irradiées, pour permettre la lecture par des moyens optiques. On préfère toutefois opérer avec des puissances d'écriture faibles. On évite ainsi de faire travailler aux limites de leurs possibilités les sources laser (diodes) employées, de façon à prolonger leur durée de vie. D'autre part, les diodes actuelles émettant des radiations bleues ont des puissances qui n'excèdent généralement pas 10 mW. Leur utilisation pour le stockage de l'information implique donc l'emploi de puissances d'écriture faibles. On se place donc de préférence dans des conditions d'écriture qui évitent la formation de structures cristallines de type corindon dans les zones irradiées. Toutefois, pour effectuer le formatage du disque, lorsqu'on désire graver le format directement sur la couche sensible, on peut utiliser des puissances plus importantes ; voir l'exemple 4 ci-après. Il convient donc de bien distinguer la gravure du format et l'écriture proprement dite.

Les couches sont élaborées de préférence dans des conditions (connues en soi) telles qu'elles favorisent l'apparition de contraintes mécaniques de compression ou de tension dans leur plan. En effet, ces contraintes créent, lors de l'écriture, une déformation topographique conduisant à la formation d'une bosse (état de compression) ou d'un creux (état de tension) favorable à l'augmentation du contraste optique engendré par l'oxydation.

Par exemple, pour augmenter les contraintes mécaniques dans la couche sensible lorsqu'elle est déposée par pulvérisation cathodique, on peut sélectionner, par de simples expériences de routine, les oxydes spinelles qui sont capables d'absorber au moins un pourcentage prédéterminé de la puissance d'un faisceau lumineux incident, dans au moins une partie de la gamme de longueurs d'onde 400-600 nm, ce pourcentage d'absorption étant suffisant pour que l'irradiation produise un échauffement de la couche sensible permettant l'oxydation de l'oxyde spinelle de départ.

On peut choisir le matériau de la couche sensible parmi ceux qui sont constitués essentiellement (hormis les agents dopants éventuels) d'un oxyde spinelle ainsi sélectionné. On choisit en particulier, par des expériences de routine, ceux qui répondent à des conditions de contraste optique suffisantes pour permettre la lecture.

Les couches sensibles, obtenues conformément à l'invention, peuvent être utilisées notamment dans des supports optiques ayant les structure optiques suivantes :
- substrat/oxyde spinelle ;
- substrat/oxyde spinelle/couche métallique absorbante ;
- substrat/oxyde spinelle/diélectrique/couche métallique absorbante ;
- substrat/diélectrique/oxyde spinelle/couche métallique absorbante.

La réalisation et l'utilisation de telles structures sont connues en soi. On peut travailler en réflexion ou en transmission. En réflexion, les opérations de lecture et d'écriture s'effectuent soit du côté substrat, ce dernier étant alors transparent, soit du côté couche sensible (ou couche métallique absorbante). Une autre possibilité (lecture en transmission) consiste à émettre le faisceau laser incident d'un côté du support optique et à lire, en analysant à l'aide d'un détecteur situé de l'autre côté le faisceau laser transmis.

Le matériau d'enregistrement, le diélectrique et le réflecteur métallique sont déposés sur le substrat, sous forme de couches minces, selon les techniques usuelles, notamment par pulvérisation cathodique radiofréquence, par évaporation sous vide ou par ablation laser et dépôt en phase vapeur.

Le substrat peut être réalisé en verre, en métal (dans ce cas, il n'y a pas lieu de prévoir de couche métallique déposée sur la couche sensible) ou en matériau polymère (par exemple polycarbonates, polyimides, polynorbornène).

On rappelle que, dans les supports optiques d'informations, les couches de diélectrique sont utilisées notamment pour leurs propriétés anti-réfléchissantes. Comme diélectriques utilisables, on peut citer des nitrures (par exemple nitrure d'aluminium, nitrure de silicium), des oxydes (par exemple silice), ou des fluorures (par exemple fluorure de calcium).

Les diverses couches du support optique d'informations étant (le substrat mis à part) des couches de faible épaisseur, cette épaisseur peut être optimisée par le calcul ou de façon expérimentale, en fonction des caractéristiques optiques desdites couches, afin d'assurer un contraste optique optimal entre les zones modifiées (irradiées) et les zones non irradiées.

Les supports optiques obtenus selon l'invention peuvent être des disques, des cartes ou des bandes. Ils peuvent être préparés et formatés de façon usuelle.

Dans des modes de réalisations particuliers, le procédé de l'invention peut encore présenter les caractéristiques suivantes, prises isolément ou, le cas échéant, en combinaison :
- on effectue ledit enregistrement en soumettant successivement des zones de la couche sensible, le long d'une piste d'enregistrement, à une irradiation à l'aide d'un faisceau lumineux de façon que ladite irradiation provoque un échauffement local de ladite zone jusqu'à une température permettant l'oxydation dudit matériau de la couche sensible dans ladite zone;
- l'irradiation est effectuée avec un faisceau lumineux de longueur d'onde inférieure à 800nm et en particulier inférieure à 600 nm ;
- le matériau de la couche mince est choisi parmi ceux pour lesquels l'oxydation se produit à une température non supérieure à 400°C environ et en particulier non supérieure à 300 °C environ ;
- ledit métal M' susceptible d'avoir plusieurs degrés d'oxydation est choisi parmi le cuivre, le fer, le manganèse, le molybdène, le vanadium, le tungstène et les terres rares ; les ions M'ⁿ⁺ peuvent être choisis, par exemple parmi les ions Cu⁺, Fe²⁺, Mn²⁺, Mn³⁺, Mo³⁺, Mo⁴⁺, V³⁺, V⁴⁺, W³⁺, W⁴⁺, Eu²⁺, Tb³⁺, etc.
- ladite couche mince est elle-même revêtue d'une couche absorbante métallique qui peut être, par exemple une couche de titane, d'aluminium, de chrome, de molybdène, de nickel, ou d'un alliage de ces métaux, par exemple un alliage Ti-Al. Cette couche peut avoir, par exemple, une épaisseur de 5 à 20 nm, et on a constaté que sa présence n'empêche pas l'oxydation de la couche sensible lors de l'écriture.

L'invention a également pour objet l'utilisation, comme matériau constituant d'une couche sensible d'un support d'information optique enregistrable une seule fois, d'un matériau qui comprend, en dehors d'agents dopants éventuellement présents, un oxyde spinelle oxydable tel que défini précédemment.

L'invention concerne également un support optique enregistrable une seule fois, et enregistré, comprenant une couche sensible déposée sur un substrat, dans lequel la couche sensible est réalisée en un matériau comprenant, en dehors d'agents dopants éventuellement présents, un oxyde spinelle oxydable tel que défini précédemment, et dans lequel ladite couche sensible comporte des zones écrites, modifiées par l'écriture, et des zones vierges (non écrites), non modifiées (et donc oxydables). Compte tenu des indications données précédemment, on voit qu'il existe deux modes de réalisation de ces supports optiques enregistrés. Dans un premier mode de réalisation la couche sensible (et donc les zones vierges), est constituée d'oxyde spinelle sous-stoechiométrique (à structure de type spinelle), les zones écrites (mais pas nécessairement les zones de formatage, lorsque le format est gravé sur la couche sensible) sont constituées d'oxyde spinelle stoechiométrique correspondant, également à structure de spinelle. Dans le second mode de réalisation, la couche sensible (et donc les zones vierges), est constituée d'oxyde spinelle stoechiométrique (ou très faiblement lacunaire), tandis que les zones écrites (mais pas nécessairement les zones de formatage) ont une structure de spinelle lacunaire (ou plus fortement lacunaire), déficiente en cations. Une propriété caractéristique commune à ces deux modes de réalisation est que les paramètres d'absorption de la lumière (indice k) des zones vierges sont modifiés lorsque le support optique enregistré est soumis à un traitement thermique oxydant (par exemple, à une température pouvant aller de 200 à 400°C), tandis que lesdits paramètres d'absorption de la lumière desdites zones vierges sont sensiblement inchangés après un même traitement thermique effectué sous atmosphère neutre (par exemple, atmosphère d'azote). Cette modification se traduit par le fait que, pour une radiation lumineuse donnée, l'intensité de l'absorption varie. Sur l'ensemble du spectre lumineux, cela se traduit par un déplacement du maximum d'absorption. En pratique, on observe donc un changement de couleur des zones vierges du support, après traitement thermique oxydant, tandis que la couleur des zones vierges reste pratiquement inchangée après un traitement thermique analogue, mais effectué sous atmosphère inerte.

Ainsi, les zones écrites présentent un contraste optique avec les zones vierges, ce contraste optique étant suffisant pour permettre la lecture. On considère que le contraste optique est suffisant pour permettre la lecture s'il est au moins égal à 5 %, et en particulier supérieur à 10 %.

Les zones modifiées pour l'écriture peuvent encore être distinguées des zones vierges par des tailles de cristallites généralement supérieures aux tailles des cristallites des zones vierges. En outre, leur teneur en oxygène est supérieure à celle des zones vierges.

Dans un support enregistré, les zones écrites représentent une proportion relativement faible de la surface du support optique, de sorte qu'en pratique la couleur de cette surface est très voisine de celle des supports non enregistrés. Une caractéristique des supports enregistrés est (selon une technique destructive) que, comme les supports non enregistrés, ils changent de couleur après traitement thermique oxydant, mais non après traitement thermique en atmosphère neutre.

L'invention ne s'étend pas à des supports optiques enregistrés dans lesquels les zones modifiées (écrites) ont une structure cristalline autre qu'une structure de spinelle, ou encore sont partiellement fondues (sauf éventuellement dans les zones de formatage, lorsque le format est gravé directement sur la couche sensible ; voir la partie expérimentale ci-après).

L'invention concerne, en outre, un procédé de lecture d'un support optique tel que défini précédemment, dans lequel on identifie, à l'aide de moyens optiques, de façon connue en soi, lesdites zones modifiées et lesdites zones non modifiées. Les moyens optiques utilisés pour la lecture englobent ici des moyens optoélectroniques, connus en soi, permettant notamment l'analyse et la comparaison des puissances lumineuses.

La lecture des informations enregistrées peut être effectuée notamment à l'aide d'un faisceau lumineux focalisé, émis par un laser, en procédant soit en transmission, soit en réflexion, de façon connue en soi. On peut utiliser les lecteurs commerciaux classiques, ou encore des lecteurs convenant pour les techniques dites à champ proche.

Les moyens optiques de lecture comparent, par exemple, les puissances lumineuses transmises ou réfléchies par des zones de la couche sensible qui sont irradiées successivement par un faisceau lumineux de lecture, le long des pistes d'enregistrement.

Les exemples suivants illustrent l'invention :

### Exemple 1 : Méthode générale d'élaboration de couches minces de ferrites Co-Cu sur un substrat de verre

Des films de ferrite de cobalt et de cuivre (ferrite Co-Cu) ont été déposés sur un substrat de verre par pulvérisation cathodique radiofréquence, en utilisant une cible préparée par mélange intime de poudres d'oxydes Fe₃O₄, Co₃O₄ et CuO dans des proportions molaires 1 :0,05 :0,85, suivie d'un frittage à 1000°C pendant 2 heures.

On opère dans les conditions suivantes :
- plasma d'argon,
- pression d'enceinte : 0,1 à 0,5 Pa,
- puissance : 2,5 W/cm²
- prépulvérisation : 30 minutes
- distance cible - substrat : 5,2 cm
- épaisseur du dépôt : de 10 à 100 nm

Les dépôts sont réalisés sur un support tournant à la vitesse de 1 tour par seconde.

L'analyse en microscopie électronique en transmission, et en microscopie à force atomique, des couches minces déposées, a montré que ces couches minces sont des couches polycristallines, la taille moyenne des cristallites étant généralement inférieure à 30 nm. L'analyse par diffraction des rayons X des couches minces brutes d'élaboration montre que la structure cristalline est celle du spinelle.

La composition chimique des couches déposées est proche de Co_{0,15}Cu_{0,85}Fe₂O₄, mais est en fait déficiente en anions (sous-stoechiométrique), comme le montre notamment le fait que la couche mince déposée est oxydable ; voir les exemples suivants. La composition chimique est donc Co_{0,15}Cu_{0,85}Fe₂O_{4-δ}. La valeur précise de δ n'a pas été déterminée. Elle ne présente pas d'intérêt en soi, l'essentiel étant que la couche sensible soit oxydable, ce qui procurera un contraste optique entre zones oxydées et zones non oxydées.

### Exemple 2 : Evolution de l'indice de réfraction n et de l'indice d'absorption k d'une couche mince de ferrite avant et après recuit à l'air.

On a préparé une couche mince de ferrite Co-Cu, conformément à l'exemple 1, dans les conditions suivantes :
- pression : 0,5 Pa
- épaisseur de la couche déposée : 70 nm.

Les indices optiques n et k ont été déterminés, de façon connue en soi, par ellipsométrie, dans un domaine de longueurs d'onde allant de 480 à 780 nm environ. Les mesures ont été effectuées avant et après un traitement oxydant : recuit à 450°C, à l'air, pendant une heure.

Les résultats de ces mesures sont donnés ci-après.

### Indice de réfraction :

Avant recuit, l'indice de réfraction est d'environ 2,5 dans tout le domaine de longueurs d'onde étudié.

Après recuit, l'indice n (environ 2,5 à 476 nm) croît avec la longueur d'onde jusqu'à un maximum d'environ 3,1 à 600 nm, puis décroît pour atteindre une valeur d'environ 2,7 à 775 nm.

### Indice d'absorption :

Avant recuit, l'indice k décroît d'environ 1 à environ 0,7, pour des longueurs d'onde allant de 480 à 780 nm. Après recuit, l'indice k est constamment inférieur ou égal à 0,2.

Ainsi, le traitement oxydant d'une couche mince ayant une composition de ferrite spinelle stoechiométrique modifie de façon notable les valeurs des indices optiques n et k.

Il existe donc entre ces indices, avant et après traitement oxydant, des différences suffisantes pour procurer un contraste optique important qui pourra être mis à profit pour lire, sur une couche sensible, des bits d'information enregistrés sous forme de micromarques, détectables optiquement, correspondant à des microdomaines dans lesquels on aura provoqué l'oxydation du ferrite spinelle de la couche sensible.

### Exemple 3 : Etude de la réflectivité

On a déposé sur un substrat de verre (épaisseur : 1,2 mm) des couches minces de ferrite de diverses épaisseurs, conformément au procédé de l'exemple 1, en opérant sous une pression de 0,5 Pa. On a étudié la réflectivité de la structure obtenue, avant et après traitement oxydant à 450°C (comme à l'exemple 2), en fonction de l'épaisseur de ferrite.

A la longueur d'onde de 780 nm, la différence des réflectivités avant et après traitement passe par un maximum pour une épaisseur de ferrite de 70 nm environ. Pour une telle couche de ferrite de 70 nm, la réflectivité passe de 23 % avant traitement oxydant à 38 % après traitement oxydant.

A la longueur d'onde de 488 nm, la différence entre les réflectivités passe par un maximum pour une épaisseur de ferrite d'environ 50 nm. Pour une telle couche ayant une épaisseur de 50 nm, la réflectivité passe de 25 % avant traitement oxydant à 40 % après traitement oxydant.

Ainsi, les coefficients de réflexion, avant et après traitement oxydant, sont suffisamment différents pour procurer un contraste optique satisfaisant permettant la détection des zones oxydées et non oxydées, et permettant donc la lecture selon une méthode optique utilisant la réflexion.

### Exemple 4 : Conditions générales d'écriture

Dans les exemples ci-dessous, l'écriture des informations et leur lecture sont effectuées à l'aide d'un testeur conçu à partir d'un lecteur ATG 6000 (commercialisée par NEW ATG). Ce testeur permet d'utiliser des disques ayant un diamètre de 5 pouces ¼ ou de 12 pouces. La vitesse de rotation des disques est de 1 200 tours par minute.

Les puissances d'écriture dépendent de la longueur d'onde du laser, ainsi que des matériaux et des structures optiques étudiées, et varient de 15 à 30 mW à 780 nm et de 4 à 30 mW à 488 nm. La puissance de lecture est au plus de 1,5 mW. Les lasers sont utilisés avec des durées d'impulsions pouvant aller de 50 ns à 150 ns.

Pour l'écriture et pour la lecture, la source laser est située du côté du substrat.

Afin de rendre les disques exploitables par le lecteur-enregistreur, on est amené à inscrire à la surface des disques des informations optiques qui constituent le format. Celles-ci permettent le guidage de la tête optique, sa focalisation et la synchronisation de ces actions avec la période de rotation du média. Une machine spéciale, de type connu en soi, permet d'inscrire le format en chauffant avec un spot laser la couche de ferrite avec une puissance supérieure à 30 mW. Aux endroits insolés, les zones sont partiellement fondues. Ces dernières présentent donc par rapport aux zones vierges un contraste optique maximal, auquel on attribue la valeur 100%. Ce signal optique est pris comme signal de référence. Pour évaluer les signaux correspondant aux données écrites ultérieurement par le lecteur-enregistreur, on utilise les modifications chimiques, cristallines et topographiques des couches de ferrite selon la présente invention. Les résultats de lecture des signaux correspondant aux données écrites sur le disque sont exprimées en pourcentage du signal de référence.

### Exemple 5: Mise en évidence des phénomènes permettant l'écriture par irradiation laser : effet de la cristallisation

Une couche mince de ferrite est déposée par pulvérisation cathodique radiofréquence, sur un substrat constitué par une grille de microscopie, dans les conditions suivantes :
- pression : 0,5 Pa
- puissance : 2,5 W/cm²
- distance cible - substrat : 5,2 cm
- vitesse de rotation du substrat : 1 tour/s.
- prépulvérisation : 30 minutes
- épaisseur du film de ferrite : 20nm.

La composition de la cible est la même que celle de la cible de l'exemple 1. On obtient encore un ferrite de cobalt et de cuivre sous-stoechiométrique.

L'échantillon obtenu est irradié en mode statique (c'est-à-dire avec la couche de ferrite immobile pendant l'écriture) par un faisceau laser focalisé à 488 nm, de puissance 9,5 mW.
L'observation des zones insolées, par microscopie électronique en transmission, révèle une cristallisation locale de la couche de ferrite, se traduisant par un accroissement de la taille des cristallites. La taille moyenne des cristallites passe de 7,5 nm (zones non insolées) à 40 nm (zones insolées).

### Exemple 6: Mise en évidence des phénomènes permettant l'écriture : effet des contraintes dans les films de ferrite spinelle.

On dépose des couches minces de ferrite sur un substrat de verre (disque de diamètre 5,25 pouces et d'épaisseur 1,2 mm), en opérant comme à l'exemple 1. On obtient un disque revêtu d'une couche mince de ferrite (sous-stoechiométrique) de 40 nm d'épaisseur, déposée à une pression de 0,1 Pa.

L'écriture est effectuée comme décrit à l'exemple 4.

Avec une puissance d'écriture de 10 mW (longueur d'onde 488 nm), les signaux de lecture correspondent à 25 % du signal de référence. Avec une puissance d'écriture de 16 mW (longueur d'onde 488 nm) les signaux de lecture s'élèvent à 80 % du signal de référence.

A 488 nm, la puissance minimale d'écriture est de 10 mW.

Le même disque est alors traité, sous atmosphère d'azote, à 250°C pendant une heure, puis on le laisse refroidir dans le four.

L'état d'oxydation étant constant, ce traitement thermique modifie uniquement l'état des contraintes dans la couche mince de ferrite.

Après ce traitement, la puissance minimale d'écriture à 488 nm, est de 14 mW (signal de lecture : 20 % du signal de référence).

Ainsi, les contraintes présentes dans la couche mince déposée facilitent l'écriture, puisque la diminution des contraintes a pour effet d'augmenter la puissance minimale d'écriture.

### Exemple 7 : Mise en évidence des phénomènes permettant l'écriture : effet de l'oxydation :

Une couche mince de ferrite de 70 nm d'épaisseur est déposée sous une pression de 0,5 Pa, de façon analogue à celle décrite à l'exemple précédent.

Une puissance d'écriture de 12,5 mW (longueur d'onde : 488 nm) permet d'obtenir en lecture un signal s'élevant à 80 % du signal de référence.

Le disque est ensuite traité pendant une heure à l'air à 250°C.

Après ce traitement, l'écriture n'est plus possible à 12,5 mW.

Ainsi, le caractère oxydable de la couche mince déposée, en rendant possible l'oxydation des cations métalliques pendant l'irradiation, qui est effectuée à l'air, permet l'écriture, et le support enregistré obtenu n'est pas réinscriptible dans les mêmes conditions. Le support enregistré obtenu est donc de type WORM.

### Exemple 8 : Essai d'écriture sur un système optique verre/ferrite ; topographie des zones insolées

On utilise un substrat de verre de 5,25 pouces de diamètre et de 1,2 mm d'épaisseur. On dépose, comme décrit à l'exemple 1, un film de ferrite par pulvérisation cathodique radiofréquence sous une pression d'argon de 0,5 Pa. L'épaisseur de la couche de ferrite déposée est de 70 nm.

Les écritures sont réalisées entre les rayons 62 mm et 68 mm. L'enregistrement est effectué à l'aide d'un faisceau laser focalisé émettant à 488 nm à différentes puissances d'écriture variant de 9 à 16 mW.

Les puissances indiquées sont des puissances de crête atteintes durant les impulsions de modulation du laser focalisé.

Pour des puissances d'écriture comprises entre 12 et 16 mW, la lecture donne un signal de 100 % par rapport au signal de référence. L'observation par microscopie à force atomique (AFM) montre que les bits sont sous forme de bosses dont le centre est percé.

Pour une puissance d'écriture de 11 mW, la lecture donne 50 % du signal de référence. Une déformation topographique sous forme de bosses est mise en évidence par AFM. Le diamètre moyen des bits est de 0,7 µm et la hauteur de la déformation est de 100 nm.

Pour des puissances d'écriture de 9 à 10 mW, le signal de lecture est de 5 % du signal de référence, et la déformation en forme de bosse observée présente un diamètre de 0,6 µm et une hauteur de 70 nm.

Ainsi, la structure optique étudiée peut être utilisée avec une puissance d'écriture comprise entre 9 et 11 mW à 488 nm.

### Exemple 9 : Enregistrement par irradiation laser d'une couche de ferrite déposée sur une résine.

On utilise comme substrat un disque de verre de 12 pouces de diamètre et de 1,2 mm d'épaisseur, recouvert d'une couche de résine de 25 µm d'épaisseur dans laquelle est inscrit le format. On dépose sur la couche de résine, une couche mince de ferrite (sous-stoechiométrique) selon le procédé décrit à l'exemple 1, sous une pression d'argon de 0,5 Pa.

L'épaisseur de la couche de ferrite déposée est de 70 nm.

L'écriture est effectuée à partir du rayon 62 mm avec un laser émettant à une longueur d'onde de 780 nm.

Pour une puissance d'écriture de 13 mW, aucun signal de lecture n'est observé. Les observations par AFM révèlent une déformation topographique de diamètre 0,75 µm et de hauteur 40 nm.

Pour des puissances d'écriture allant de 14 à 19 mW, on observe par AFM des enregistrements sous la forme de déformations topographiques dont le diamètre et la hauteur augmentent avec la puissance d'écriture.

Pour des puissances d'écriture comprises entre 19 et 25 mW, l'observation par AFM montre des bosses dont le centre est percé. Le signal atteint 100 % du signal de référence.

La résine est une résine de duplication classique (obtenue par copolymérisation d'un mélange de monomères à base de triacrylate de triméthylolpropane et de diacrylate de tripropylènegycol, en présence d'un photo-initiateur (commercialisé sous la dénomination Ingacure 651 par CIBA).

### Exemple 10 : Enregistrement par irradiation laser d'une couche de ferrite Co-Cu, déposée sur une résine

On opère comme à l'exemple 9, la seule différence étant que la couche mince de ferrite a une épaisseur de 50 nm. L'écriture est réalisée, sur le disque, à partir du rayon 97 mm, à la longueur d'onde 780 nm.

Pour des puissances d'écriture supérieures ou égales à 21 mW, on observe par AFM des bits sous forme de bosses dont le centre est percé. Le signal est de 100 % par rapport au signal de référence.

Pour des puissances d'écriture allant de 11 à 19 mW, on observe par AFM des bits sous forme de déformations topographiques (diamètre de 0,5 µm et hauteur de 40 nm pour une puissance d'écriture de 11 mW).

### Exemple 11 : Enregistrement sur une structure optique verre/ferrite/titane

Le film de ferrite est déposé par pulvérisation cathodique radiofréquence d'une cible de ferrite Co-Cu, comme décrit à l'exemple 1, sur deux substrats de verre de 5,25 pouces de diamètre et de 1,2 mm d'épaisseur, sous une pression d'argon de 0,1 Pa. L'épaisseur de la couche de ferrite déposée est de 70 nm. On dépose ensuite sur l'un des substrats une couche réflectrice de titane sur la couche de ferrite, par pulvérisation cathodique à 2 W/cm² sous argon (0,5Pa).

La couche de titane a une épaisseur de 12 nm.

Une écriture est réalisée avec un laser émettant à 780 nm, pour des puissances comprises entre 15 et 29 mW.

La puissance de lecture est de 1 mW.

La structure sans titane ne permet pas de détecter le signal de lecture, même pour des puissances d'écriture de 29 mW.

Avec la structure comprenant la couche de titane, pour des puissances d'écriture de 17 et 22 mW, on observe, par rapport au signal de référence, des signaux de lecture de 10 % et 80 %, respectivement. On observe, par AFM, des bits sous la forme de déformations topographiques (diamètre de 0,5 µm et hauteur de 25 nm pour 17 mW).

Pour des puissances d'écriture égales ou supérieures à 23 mW, l'observation par AFM révèle des bosses dont le centre est percé. Le signal atteint 100 % du signal de référence.

On notera que la présence de la couche de titane de 12 nm n'empêche pas l'oxydation de la couche de ferrite pendant l'insolation.

### Exemple 12: Ecriture par irradiation laser d'une couche mince de magnétite.

On dépose une couche mince de magnétite par pulvérisation cathodique d'une cible de magnétite (Fe₃ O₄) directement sur un disque de verre de 12 pouces de diamètre, revêtu au préalable d'une résine de duplication classique, contenant le format, obtenue comme indiqué à l'exemple 9 ci-dessus. On effectue le dépôt dans les conditions suivantes :
- pression : 0,5 Pa
- puissance : 2,5 W/cm²
- distance cible - substrat : 5,2 cm
- vitesse de rotation du substrat : 1 tour/s.
- prépulvérisation : 30 minutes
- épaisseur du film de magnétite déposé : 70 nm.

L'écriture est réalisée à 488 nm, avec des puissances comprises entre 8 et 20 mW, au rayon 108 mm du disque.

L'écriture est possible pour des puissances supérieures ou égales à 8 mW. Le signal de lecture, pour une écriture à 8 mW, est de 5 % par rapport au signal de référence.

Pour une puissance d'écriture de 12-14 mW, le signal de lecture est de 60 %.

On effectue ensuite un traitement à 200°C à l'air pendant 24 heures. Après ce traitement, la puissance minimale permettant l'écriture est de 14 mW (signal de lecture : 50 %).

Le traitement thermique a permis une relaxation des contraintes dans le film et une oxydation des ions ferreux, ce qui diminue la sensibilité de la couche mince à l'écriture après traitement (la quantité d'ions oxydables restants étant plus faible).

### Exemple 13 : Evolution de l'absorption d'un ferrite de cuivre sous-stoechiométrique lors d'un recuit sous air à 350°C pendant 5 heures.

On prépare une couche mince de ferrite spinelle CuFe₂O_{4-δ} en substituant une cible de CuFe₂O₄ à la cible de l'exemple 1, mais en conservant les mêmes conditions de dépôt par pulvérisation cathodique radio-fréquence.

L'absorption optique d'une couche de ferrite CuFe₂O_{4-δ} ainsi préparée a été mesurée dans le domaine spectral visible. La même couche a été ensuite oxydée sous air à 350°C pendant 5 heures et son absorption optique a été mesurée dans les mêmes conditions que précédemment. Le changement de couleur dû à l'oxydation, qui peut être constaté par simple examen à l'oeil nu, résulte d'une modification du spectre d'absorption révélée par le tableau ci-dessous :

| Longueur d'onde (nm) | Absorption (%) | |
|---|---|---|
| | Avant traitement | Après traitement |
| 780 | 0,362 | 0,274 |
| 680 | 0,391 | 0,282 |
| 650 | 0,402 | 0,285 |
| 600 | 0,430 | 0,295 |
| 560 | 0,469 | 0,329 |
| 520 | 0,538 | 0,404 |
| 500 | 0,582 | 0,460 |
| 480 | 0,639 | 0,528 |
| 460 | 0,706 | 0,611 |
| 440 | 0,800 | 0,734 |
| 420 | 0,911 | 0,884 |

### Exemple 14 : Dépôt d'une couche sensible à base d'oxydes spinelles stoechiométriques ou sous-stoechiométriques.

De façon analogue, on a déposé, par pulvérisation cathodique, sur des disques de verre, des couches ayant les compositions suivantes :
- Mn_{1,9}Fe_{1,1}O₄
- Nln_{1,5}Fe_{0,5}O₄
- CU_{0,7}Co_{0,3}Mn_{0,75}Fe_{1,25}O_{4-δ}
- Cu_{0,5}Co_{0,5}MnFeO_{4-δ}
- CuCr₂O_{4-δ}

Chacun des supports optiques obtenus peut être modifié par écriture avec un faisceau laser. On obtient un support optique enregistré de type WORM.

## Revendications

1. Procédé d'enregistrement d'informations sous forme numérique, sur un support optique enregistrable une seule fois comprenant une couche sensible déposée, sous forme de couche mince, sur un substrat, ledit procédé comprenant des étapes d'enregistrement consistant à échauffer localement, et successivement, des zones de la couche sensible,
dans lequel ladite couche sensible est réalisée en un matériau oxydable qui comprend, en dehors d'agents dopants éventuellement présents, un oxyde spinelle oxydable comprenant, sous forme d'oxydes, au moins deux métaux de transition ayant des états d'oxydation différents, et dans lequel on effectue ledit échauffement dans des conditions permettant l'oxydation dudit oxyde spinelle oxydable.

2. Procédé selon la revendication 1, dans lequel ledit oxyde spinelle oxydable répond à la formule I :
Mₓ³⁺M'_{y}ⁿ⁺M"_{z}²⁺O_{4+δ}²⁻ (I)
dans laquelle M représente au moins un métal trivalent choisi parmi Fe, Mn, Co, Cr et Al,
M' représente au moins un métal susceptible d'avoir plusieurs degrés d'oxydation,
M" est un métal divalent choisi parmi Mg, Co, Ni, Cu et Zn,
n est la valence de M' dans l'ion M^{,n+}, qui est un ion oxydable en un ion de valence supérieure à n,
x représente la quantité d'atomes de métal M et peut varier de 0,8 à 2,8 environ,
y est un nombre représentant la quantité d'atomes M' et est au moins égal à environ 0,2,
z est un nombre, éventuellement nul, représentant la quantité d'atomes M",
δ est un nombre égal à (3x + ny + 2z-8)/2, et
la somme (x+y+z) étant égale à 3.

3. Procédé selon la revendication 1 ou 2, dans lequel on effectue ledit enregistrement en soumettant successivement des zones de la couche sensible, le long d'une piste d'enregistrement, à une irradiation à l'aide d'un faisceau lumineux de façon que ladite irradiation provoque un échauffement local de ladite zone jusqu'à une température permettant l'oxydation dudit matériau de la couche sensible dans ladite zone.

4. Procédé selon la revendication 3, dans lequel ladite irradiation est effectuée avec un faisceau lumineux de longueur d'onde inférieure à 800 nm, ou inférieure à 600 nm.

5. Procédé selon l'une quelconque des revendications précédentes, dans lequel le matériau de la couche mince est choisi parmi ceux pour lesquels l'oxydation se produit à une température non supérieure à 400°C environ, ou non supérieure à 300°C.

6. Procédé selon l'une quelconque des revendications précédentes, dans lequel ledit oxyde spinelle oxydable contient, sous forme d'oxyde, un métal susceptible d'avoir plusieurs degrés d'oxydation choisi parmi le cuivre, le fer, le manganèse, le molybdène, le vanadium, le tungstène et les terres rares.

7. Procédé selon l'une quelconque des revendications 1 à 5, dans lequel ledit oxyde spinelle oxydable est choisi parmi :
- les ferrites de cuivre éventuellement substitués, répondant à la formule I, avec M = Fe et M' = Cu ;
- les composés de formule I à base de fer et de manganèse,
- les composés de formule I à base de chrome et de cuivre,
- les composés de formule I à base de fer, de manganèse, de cobalt et de cuivre,
- les oxydes spinelles stoechiométriques choisis parmi Fe₃O₄, FeCr₂O₄, FeAl₂O₄, Mₙ₃O₄ ;
- les manganites répondant à la formule I avec M = Mn et δ égale à zéro ou voisin de zéro ;
- les manganites de nickel et de cuivre de formule Ni_{z}Cu_{y}Mn_{3-y-z}O₄, dans laquelle y et z sont définis comme dans la revendication 2.

8. Procédé selon l'une quelconque des revendications précédentes, dans lequel ladite couche sensible est revêtue d'une couche métallique.

9. Utilisation, comme matériau constituant d'une couche sensible d'un support d'information optique enregistrable une seule fois, d'un matériau oxydable qui comprend, en dehors d'agents dopants éventuellement présents, un oxyde spinelle comprenant au moins deux métaux de transition ayant des états d'oxydations différents.

10. Utilisation selon la revendication 9, dans laquelle ledit matériau est tel que défini dans l'une quelconque des revendications 2 et 5 à 7.

11. Support optique enregistrable une seule fois, et enregistré, comprenant une couche sensible déposée sur un substrat, dans lequel la couche sensible est réalisée en un matériau oxydable qui comprend, en dehors d'agents dopants éventuellement présents, un oxyde spinelle oxydable comprenant au moins deux métaux de transition ayant des états d'oxydations différents, et dans lequel ladite couche sensible comporte des zones vierges, non modifiées et oxydables, et des zones modifiées par l'écriture.

12. Support optique selon la revendication 11, dans lequel le matériau constituant lesdites zones vierges est tel que défini dans l'une quelconque des revendications 2 et 5 à 7.

13. Procédé de lecture d'un support optique, dans lequel le support optique est tel que défini dans l'une quelconque des revendications 11 et 12, et dans lequel on identifie lesdites zones modifiées et lesdites zones non modifiées à l'aide de moyens optiques.

## Claims

1. A method of recording data in digital form on a write-once read-many optical medium comprising a sensitive film deposited, in thin-film form, on a substrate, said method comprising recording steps consisting in heating, locally and in succession, regions of the sensitive film, in which said sensitive film is made of an oxidizable material which comprises, apart from optional dopants present, an oxidizable spinel oxide comprising, in oxide form, at least two transition metals having different oxidation states, and in which said heating is carried out under conditions allowing oxidation of said oxidizable spinel oxide.

2. The method as claimed in claim 1, in which said oxidizable spinel oxide satisfies formula I:
Mₓ³⁺M'_{y}ⁿ⁺M"_{z}²⁺O_{4+δ}²⁻ (I)
in which M represents at least one trivalent metal chosen from Fe, Mn, Co, Cr and Al ;
M' represents at least one metal that can have several oxidation states;
M" is a divalent metal chosen from Mg, Co, Ni, Cu and Zn;
n is the valency of M' in the M'ⁿ⁺ ion, which is an ion that can oxidize to an ion of higher valency than n ;
x represents the quantity of atoms of metal M and may vary from 0.8 to 2.8 approximately;
y is a number representing the quantity of M' atoms and is at least equal to approximately 0.2;
z is a number, possibly zero, representing the quantity of M" atoms;
δ is a number equal to (3x + ny + 2z-8)/2; and
the sum (x+y+z) being equal to 3.

3. The method as claimed in claim 1 or 2, in which said recording is carried out by subjecting, in succession, along a recording track, regions of the sensitive film to irradiation by means of a light beam so that said irradiation causes local heating of said region up to a temperature allowing said material of the sensitive film in said region to oxidize.

4. The method as claimed in claim 3, in which said irradiation is carried out with a light beam of wavelength less than 800 nm or less than 600 nm.

5. The method as claimed in any one of the preceding claims, in which the material of the thin film is chosen from those for which the oxidation occurs at a temperature not exceeding about 400°C, or not exceeding 300°C.

6. The method as claimed in any one of the preceding claims, in which said oxidizable spinel oxide contains, in oxide form, a metal capable of having several oxidation states chosen from copper, iron, manganese, molybdenum, vanadium, tungsten and the rare earths.

7. The method as claimed in any one of claims 1 to 5, in which said oxidizable spinel oxide is chosen from:
- copper ferrites, optionally substituted, satisfying formula I with M = Fe and M' = Cu;
- compounds of formula I based on iron and manganese;
- compounds of formula I based on chromium and copper;
- compounds of formula I based on iron, manganese, cobalt and copper;
- stoichiometric spinel oxides chosen from Fe₃O₄, FeCr₂O₄, FeAl₂O₄ and Mn₃O₄ ;
- manganites satisfying formula I with M = Mn and δ equal to zero or close to zero; and
- nickel copper manganites of formula Ni_{z}Cu_{y}Mn_{3-y-z}O₄ in which y and z are defined as in claim 2.

8. The method as claimed in any one of the preceding claims, in which said sensitive film is coated with a metal film.

9. The use, as constituent material of a sensitive film of a write-once read-many optical data medium, of an oxidizable material which comprises, apart from dopants optionally present, a spinel oxide comprising at least two transition metals having different oxidation states.

10. The use as claimed in claim 9, in which said material is as defined in any one of claims 2 and 5 to 7.

11. A write-once read-many optical medium comprising a sensitive film deposited on a substrate, in which medium the sensitive film is made of an oxidizable material which comprises, apart from dopants optionally present, an oxidizable spinel oxide comprising at least two transition metals having different oxidation states, and in which medium said sensitive film comprises virgin regions that are unmodified and oxidizable and regions that are modified by the write operation.

12. The optical medium as claimed in claim 11, in which the material constituting said virgin regions is as defined in any one of claims 2 and 5 to 7.

13. A method of reading an optical medium, in which the optical medium is as defined in either of claims 11 and 12 and in which said modified regions and said unmodified regions are identified using optical means.

## Patentansprüche

1. Verfahren zum Aufzeichnen von Informationen in digitaler Form auf einem nur einmal beschreibbaren optischen Träger, der eine empfindliche Schicht umfasst, die in Form einer Dünnschicht auf einem Substrat abgeschieden ist, wobei das Verfahren Aufzeichnungsschritte umfasst, die aus einer lokalen und sukzessiven Erwärmung der Zonen der empfindlichen Schicht bestehen,
wobei die empfindliche Schicht aus einem oxidierbaren Material gebildet ist, das außer gegebenenfalls vorhandenen Dotierungsmitteln ein oxidierbares Spinelloxid umfasst, das in Form von Oxiden mindestens zwei Übergangsmetalle mit unterschiedlichen Oxidationszuständen umfasst, und wobei man die Erwärmung unter Bedingungen durchführt, die die Oxidation des oxidierbaren Spinelloxids ermöglichen.

2. Verfahren nach Anspruch 1, wobei das oxidierbare Spinelloxid die Formel I aufweist
Mₓ³⁺M'_{y}ⁿ⁺M"_{z}²⁺O_{4+δ}²⁻ (I)
wobei M mindestens ein dreiwertiges Metall bedeutet, das aus Fe, Mn, Co, Cr und Al ausgewählt ist,
M' mindestens ein Metall bedeutet, das mehrere Oxidationsgrade aufweisen kann,
M" ein zweiwertiges Metall bedeutet, das aus Mg, Co, Ni, Cu und Zn ausgewählt ist,
n die Wertigkeit von M' im Ion M'ⁿ⁺ bedeutet, bei dem es sich um ein Ion handelt, das zu einem Ion mit einer Wertigkeit von mehr als n oxidierbar ist,
x die Menge der Metallatome M bedeutet und von etwa 0,8 bis 2,8 variieren kann,
y eine Zahl bedeutet, die die Menge der Atome M' wiedergibt und mindestens einen Wert von etwa 0,2 hat,
z eine Zahl, gegebenenfalls 0, bedeutet, die die Menge der M"-Atome wiedergibt,
δ eine Zahl mit dem Wert (3x + ny + 2z-8)/2 bedeutet und die Summe (x + y + z) den Wert 3 hat.

3. Verfahren nach Anspruch 1 oder 2, wobei man die Aufzeichnung durchführt, indem man die Zonen der empfindlichen Schicht entlang einer Aufzeichnungsspur einer Strahlung mit Hilfe eines Lichtbündels so aussetzt, dass die Strahlung eine lokale Erwärmung dieser Zone bis zu einer Temperatur bewirkt, die eine Oxidation des Materials der empfindlichen Schicht in dieser Zone ermöglicht.

4. Verfahren nach Anspruch 3, wobei die Bestrahlung mit einem Lichtbündel mit einer Wellenlänge unter 800 nm oder unter 600 nm durchgeführt wird.

5. Verfahren nach einem der vorstehenden Ansprüche, wobei das Material der Dünnschicht unter Materialien ausgewählt wird, bei denen die Oxidation bei einer Temperatur von nicht über etwa 400 °C oder nicht über 300 °C erfolgt.

6. Verfahren nach einem der vorstehenden Ansprüche, wobei das oxidierbare Spinelloxid in Oxidform ein Metall enthält, das in mehreren Oxidationsgraden vorliegen kann und aus Kupfer, Eisen, Mangan, Molybdän, Vanadium, Wolfram und Seltenerdmetallen ausgewählt ist.

7. Verfahren nach einem der Ansprüche 1 bis 5, wobei das oxidierbare Spinelloxid ausgewählt ist aus:
- gegebenenfalls substituierten Kupferferriten der Formel I, wobei M = Fe und M' = Cu;
- Verbindungen der Formel I auf der Basis von Eisen und Mangan,
- Verbindungen der Formel I auf der Basis von Chrom und Kupfer,
- Verbindungen der Formel I auf der Basis von Eisen, Mangan, Kobalt und Kupfer,
- stöchiometrische Spinelloxide, die aus Fe₃O₄, FeCr₂O₄, FeAl₂O₄ und Mn₃O₄ ausgewählt sind,
- Manganite der Formel I, wobei M = Mn und δ 0 bedeutet oder einen Wert in der Nähe von 0 hat; und
- Nickel- und Kupfermanganite der Formel Ni_{z}Cu_{y}Mn_{3-y-z}O₄, wobei y und z der Definition in Anspruch 2 entsprechen.

8. Verfahren nach einem der vorstehenden Ansprüche, wobei die empfindliche Schicht von einer Metallschicht bedeckt ist.

9. Verwendung eines oxidierbaren Materials als Material einer empfindlichen Schicht eines nur einmal beschreibbaren optischen Datenträgers, wobei das oxidierbare Material außer gegebenenfalls vorhandenen Dotierungsmitteln ein Spinelloxid umfasst, das mindestens zwei Übergangsmetalle mit unterschiedlichen Oxidationszuständen umfasst.

10. Verwendung nach Anspruch 9, wobei das Material der Definition in einem der Ansprüche 2 und 5 bis 7 entspricht.

11. Nur einmal beschreibbarer und beschriebener optischer Träger, umfassend eine auf einem Substrat abgeschiedene empfindliche Schicht, wobei in der empfindlichen Schicht ein oxidierbares Material vorliegt, das außer gegebenenfalls vorhandenen Dotierungsmitteln ein oxidierbares Spinelloxid umfasst, das mindestens zwei Übergangsmetalle mit unterschiedlichen Oxidationszuständen umfasst und wobei die empfindliche Schicht jungfräuliche, nicht-modifizierte und oxidierbare Zonen und durch Beschreiben modifizierte Zonen aufweist.

12. Optischer Träger nach Anspruch 11, wobei das die jungfräulichen Zonen bildende Material der Definition in einem der Ansprüche 2 und 5 bis 7 entspricht.

13. Verfahren zum Lesen eines optischen Trägers, wobei der optische Träger der Definition in einem der Ansprüche 11 und 12 entspricht und wobei man die modifizierten Zonen und die nicht-modifizierten Zone mittels optischer Einrichtungen identifiziert.
